# EUROPEAN PATENT APPLICATION

(11) **EP 3 139 246 A1**
(43) Date of publication of application: **08.03.2017**
(21) Application number: 14891733.9
(22) Date of filing: 30.06.2014
(51) Int. Cl.: G06F 3/01

(54) **CONTROL METHOD AND APPARATUS, ELECTRONIC DEVICE, AND COMPUTER STORAGE MEDIUM**

(30) Priority: 16.05.2014 CN 201410209707
(71) Applicant: ZTE Corporation, Shenzhen City, Guangdong 518057 (CN)
(72) Inventor: LIN, Jia, Shenzhen Guangdong 518057 (CN); CAI, Chengliang, Shenzhen Guangdong 518057 (CN); LI, Chunli, Shenzhen Guangdong 518057 (CN)
(74) Representative: Regimbeau
(86) International application number: PCT/CN2014/081238
(87) International publication number: WO 2015/172424

(57) **Abstract**

A control method, including: obtaining surface information of a contact surface between user limbs and a control apparatus by detecting the contact surface, the surface information is used for representing a gesture to be recognized, and the control apparatus is fixed to the user limbs; recognizing the gesture to be recognized based on at least the surface information to obtain a recognition result; and controlling a controlled apparatus based on the recognition result.. Embodiments of the present invention also disclose a control apparatus, an electronic device and a computer storage medium.

## Description

### TECHNICAL FIELD

The present invention relates to the electronics field, and particularly relates to a control method and apparatus, an electronic device and a computer storage medium.

### BACKGROUND

At present, as an intelligent terminal becomes more and more popular in human life, to satisfy operation requirements under different use scenarios, a user can operate the intelligent terminal through sound control, human sensing, touch control and other modes, and the mode of touch control is adopted by most of users.

When the mode of touch control is adopted, the user needs to touch a touch screen with hands and then perform various operations, which is troublesome. Moreover, in some application scenarios, it is inconvenient for the user to control a terminal device through touch control, for example, when the user is running, in a conference or is far away from the terminal device and the like. Similarly, with respect to the mode of sound control and human sensing, there also exists a problem of not suitable for some application scenarios due to the operating mode thereof. For example, when the user is in a conference, it is inconvenient to perform the sound control or human sensing control on the terminal. As another example, when the user is in a relatively noisy environment, the terminal device cannot be accurately controlled through the sound control. As another example, when the user is in a crowded environment, human sensing cannot be detected accurately.

It can be seen that there does not exist a more reasonable control mode in the related art for controlling the terminal device.

### SUMMARY

In view of this, embodiments of the present invention desire to provide a control method and apparatus, an electronic device and a computer storage medium.

Technical solutions of the embodiments of the present invention are realized as follows.

In a first aspect, an embodiment of the present invention provides a control method, including: obtaining surface information of a contact surface between user limbs and a control apparatus by detecting the contact surface, the surface information is used for representing a gesture to be recognized, and the control apparatus is fixed to the user limbs; recognizing the gesture to be recognized based on at least the surface information to obtain a recognition result; and controlling a controlled apparatus based on the recognition result.

In a second aspect, an embodiment of the present invention provides a control apparatus, including: an obtaining unit, a recognizing unit and a control unit, where the obtaining unit is configured to obtain surface information of a contact surface between user limbs and the control apparatus by detecting the contact surface, the surface information is used for representing a gesture to be recognized, and the control apparatus is fixed to the user limbs; the recognizing unit is configured to recognize the gesture to be recognized based on at least the surface information to obtain a recognition result; and the control unit is configured to control a controlled apparatus based on the recognition result.

In a third aspect, an embodiment of the present invention provides an electronic device, including a main body; the electronic device further includes: a touch sensor loaded on the main body and a processor connected to the touch sensor. The processor is configured to: obtain surface information of a contact surface between user limbs and the main body by detecting the contact surface through the touch sensor, the surface information is used for representing a gesture to be recognized and the main body is fixed to the user limbs; recognize the gesture to be recognized based on at least the surface information to obtain a recognition result; and control a controlled terminal based on the recognition result.

In a fourth aspect, an embodiment of the present invention provides a computer storage medium storing computer programs that are used for executing the control method of the above embodiments.

According to the control method and apparatus, the electronic device and the computer storage medium provided in the embodiments of the present invention, surface information of a contact surface between the user limbs and the control apparatus is obtained by detecting the contact surface, the surface information is configured to represent the gesture to be recognized and the control apparatus is fixed to the user limb; the gesture to be recognized is recognized based on at least the above surface information to obtain a recognition result; and a controlled apparatus is controlled based on the recognition result. That is to say, the user can recognize the gesture conducted by himself/herself through the control apparatus fixed to the user limbs, and then control the controlled apparatus based on the recognized gesture. Therefore, as long as the gesture can be conducted by the user limbs, the control apparatus can control the controlled apparatus hereby without being limited by time and place. In this way, the needs of most of application scenarios can be satisfied, it is convenient for the user to operate and user experience is enhanced.

### BRIEF DESCRIPTION OF DRAWINGS

Fig. 1 is a structural schematic diagram showing a control system according to an embodiment of the present invention;
Fig. 2 is a functional block diagram showing a control apparatus according to an embodiment of the present invention;
Fig. 3 is a functional block diagram showing a controlled apparatus according to an embodiment of the present invention;
Fig. 4 is a flow schematic diagram showing a control method according to an embodiment of the present invention;
Fig. 5 is a schematic diagram where a smart bracelet is wore on a wrist of a user according to an embodiment of the present invention;
Fig. 6 is a schematic diagram showing a wrist of a user wrist according to an embodiment of the present invention;
Fig. 7 is a schematic diagram showing a contact surface when in a fisting gesture according to an embodiment of the present invention; and
Fig. 8 is a functional block diagram showing an electronic device according to an embodiment of the present invention.

### DETAILED DESCRIPTION

Technical solutions of the embodiments of the present invention will be clearly and completely described below in combination with drawings of the embodiments of the present invention.

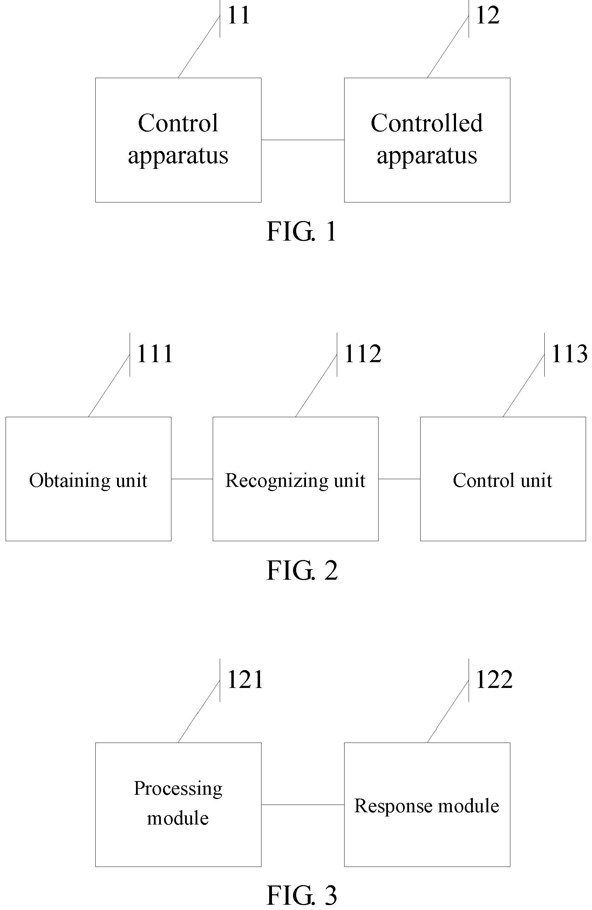

Fig. 1 is a structural schematic diagram showing a control system according to an embodiment of the present invention. As shown in Fig. 1, the control system includes a control apparatus 11 and a controlled apparatus 12. The control apparatus 11 is connected to the controlled apparatus 12, and can control the controlled apparatus 12. The control apparatus 11 and the controlled apparatus 12 can be provided in a same electronic device. For example, both of the control apparatus 11 and the controlled apparatus 12 are provided in a smart watch. In this case, the control apparatus 11 can be provided on a watch strap of the smart watch, while the controlled apparatus 12 is provided in a host of the smart watch.

The control apparatus 11 and the controlled apparatus 12 can also be separately provided in different electronic devices. For example, the control apparatus 11 is provided in a smart bracelet, and the controlled apparatus 12 is provided in a smart phone. To be sure, the control apparatus 11 and the controlled apparatus 12 can also be provided in other electronic devices, as long as the control apparatus 11 is provided on a wearable device which can be worn by the user, which is not specifically limited in the present invention.

In the present embodiment, Fig. 2 is a functional block diagram showing a control apparatus of an embodiment of the present invention. As shown in Fig. 2, the control apparatus 11 specifically includes: an obtaining unit 111, a recognizing unit 112 and a control unit 113.

The obtaining unit 111 is configured to obtain surface information of a contact surface between user limbs and the control apparatus 11 by detecting the contact surface, the surface information is used for representing a gesture to be recognized, and the control apparatus 11 is fixed to the user limbs.

The recognizing unit 112 is configured to recognize the gesture to be recognized based on at least the surface information to obtain a recognition result.

The control unit 113 is configured to control the controlled apparatus based on the recognition result.

Preferably, the recognizing unit 112 specifically includes: a matching subunit, configured to match the surface information with preset gesture templates; and a confirming subunit, configured to confirm a preset gesture corresponding to a gesture template that is successfully matched as the gesture to be recognized.

Preferably, the obtaining unit 111 is further configured to: before the gesture to be recognized is obtained, obtain the gesture template by detecting the contact surface to when the preset gesture is conducted by the user, and store the preset gestures in association with the gesture templates in one-to-one correspondence.

Preferably, the control apparatus 11 further includes: a prompting unit, configured to output, before the gesture template is obtained by the obtaining unit 111, prompt information in accordance with a preset rule, so as to prompt the user to conduct the preset gesture.

Preferably, the obtaining unit 111 is further configured to: obtain displacement information of the user limbs before the recognition result is obtained by the recognizing unit 112. At this moment, the recognizing unit 112 is specifically configured to: recognize the gesture to be recognized based on the surface information and the displacement information to obtain the recognition result.

Preferably, the control unit 113 specifically includes: a querying subunit, configured to query a control instruction corresponding to the recognition result among preset control instructions; and a transmission subunit, configured to transmit the queried control instruction to the controlled apparatus 12 so that the controlled apparatus 12 executes the control instruction to complete a corresponding function.

Fig. 3 is a functional block diagram showing a controlled apparatus of an embodiment of the present invention. As shown in Fig. 3, the controlled apparatus 12 can include a processing module 121 and a response module 122. The response module 122 can respond to the control instruction transmitted from the processing module 121 so as to complete a corresponding function. For example, a CPU served as the processing module 121 transmits an instruction for increasing the volume to a volume adjustment component served as the response module 122. At this moment, the response module 122 increases the volume. For another example, the CPU served as the processing module 121 transmits an instruction for lock screen to a display component served as the response module 122. At this moment, the response module 122 locks the screen.

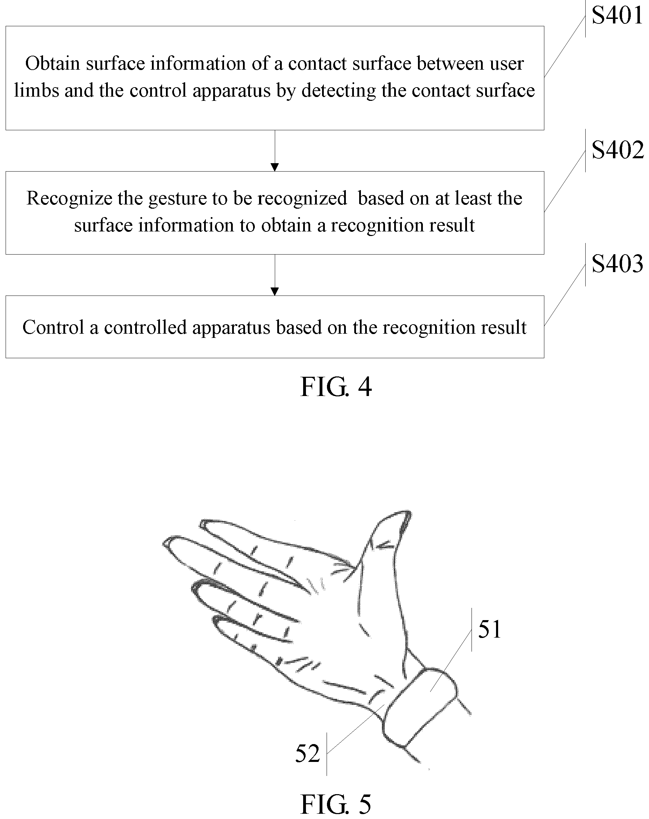

The control method provided by the embodiments of the present invention can be applied to the control apparatus 11 described in the above one or more embodiments. Fig. 4 is a flow schematic diagram of the control method according to the embodiments of the present invention. As shown in Fig. 4, the control method includes steps described below.

In S401, surface information of a contact surface between user limbs and the control apparatus is obtained by detecting the contact surface, the surface information is used for representing a gesture to be recognized and the control apparatus is fixed to the user limbs.

In the present embodiment, the user limbs may be a wrist of the user.

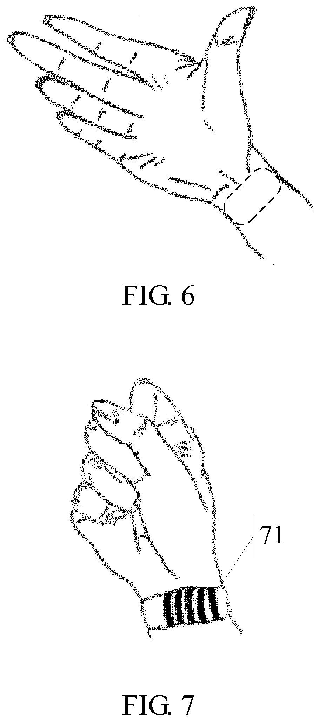

Assuming that the control apparatus 11 is provided in a smart bracelet and the controlled apparatus 12 is provided in a smart phone, when the user wears the smart bracelet on the wrist, as shown in Fig. 5, the smart bracelet 51 clings to the user wrist 52. At this moment, the control apparatus 11 contacts with the inner region of the wrist 52. The inner region of the wrist 52 described herein refers to a part at the same side as a palm on an outer surface of a human wrist, as shown in a dotted line region in Fig. 6.

Finger meridians at the inner side of the wrist 52 may change due to different actions of user fingers, causing a change of the contact surface between the inner side of the wrist 52 and the control apparatus 11. As a result, when the user conducts a gesture to be recognized, the control apparatus 11 can detect a contact surface between the inner side of the wrist 52 and the control apparatus 11 to obtain the surface information of the contact surface, and the surface information can represent the above gesture to be recognized. For example, as shown in Fig. 7, the user conducts a "fisting" gesture. At this moment, the control apparatus 11 can detect the above contact surface 71 through a touch sensor such as a pressure sensor and a nano indium tin oxide (ITO) film, so as to obtain the surface information of the contact surface 71, such as the area, the shape, and the region location.

In a specific implementation process, the contact surfaces detected by the control apparatus 11 are different due to different gestures conducted by the user. Accordingly, the surface information obtained is different. Moreover, for different users, the surface information is also different. Those skilled in the art can make independent design by themselves according to actual conditions, which is not specifically limited in the present invention.

In another embodiment, prior to S401, the method further includes: detecting whether the control apparatus is fixed to the user limbs.

Specifically, detecting whether the control apparatus is fixed to the user limbs can be realized by detecting whether the electronic device where the control apparatus is located is powered, or by detecting whether the temperature of the inner side of the electronic device is increased, and the like.

For example, after the smart bracelet 51 being worn on the wrist 52, the user can manually turn on a power switch arranged on the smart bracelet 51, so as to power the smart bracelet 51. At this moment, the control apparatus 11 can determine that the smart bracelet 51 has already been worn on the wrist by the user and the control apparatus 11 is also fixed to the wrist of the user.

As another example, after the smart bracelet being worn on the wrist by the user, the control apparatus 11 controls a temperature sensor provided on the inner surface of the smart bracelet 51 to detect whether the temperature of the inner side of the smart bracelet 51 is increased. If the temperature is increased, the control apparatus 11 can determine that the smart bracelet has already been worn on the wrist by the user and the control apparatus 11 is also fixed to the wrist of the user.

To be sure, in the practical application, other detecting modes can also be used to detect whether the control apparatus 11 is fixed to the wrist of the user, which is not specifically limited in the present invention.

In S402, the gesture to be recognized is recognized based on at least the surface information to obtain a recognition result.

In a concrete implementation process, S402 may be as follows: the surface information is matched with preset gesture templates, and a preset gesture corresponding to a gesture template that is successfully matched is confirmed as the gesture to be recognized.

Specifically, some gesture templates are preset in the smart bracelet 51. These gesture templates and the preset gestures are in one-to-one correspondence. After the control apparatus 11 obtains the above surface information, the surface information can be matched with the gesture templates.

In the practical application, these gesture templates may be obtained by the control apparatus 11 through detecting the contact surface between the user limbs and the control apparatus 11 when the preset gestures are conducted by the user, and specifically may be information such as the area, shape, and pressure. That is to say, the gesture templates and the above surface information belong to the same kind of information.

Then, through matching the surface information with the gesture templates, a preset gesture corresponding to a gesture template that is successfully matched is confirmed as the above gesture to be recognized. For example, if the surface information is successfully matched with a second gesture template among the gesture templates by being matched with the gesture templates, the control apparatus 11 determines a preset gesture, such as "fisting" gesture, corresponding to the second gesture template as the gesture to be recognized. That is to say, the "fisting" gesture is recognized as the gesture to be recognized by the control apparatus 11.

Preferably, because a position deviation may occur every time the smart bracelet 51 is worn, the surface information obtained by the control apparatus 11, for representing the same gesture, is different and inaccurate recognition is caused. Therefore, to enhance recognition accuracy, prior to S401, the method further includes: obtaining the gesture templates by detecting the contact surface when the preset gestures are conducted by the user, and storing the preset gestures in association with the gesture templates in one-to-one correspondence.

Specifically, before the gesture to be recognized is obtained by the control apparatus 11, a template presetting process requires to be conducted firstly. That is to say, the control apparatus 11 needs to obtain gesture templates of a current user with respect to the current wearing position of the smart bracelet.

Preferably, the user conducts preset gestures in accordance with a preset rule. For example, in accordance with a preset sequence of "fisting", "stretching five fingers", "stretching a thumb only", "stretching a forefinger only", "stretching a middle finger only", "stretching a ring finger only" and "stretching a little finger only", the user conducts the above seven preset gestures in sequence, and the control apparatus 11 further obtains gesture templates corresponding to the above preset gestures in sequence and stores the preset gestures in association with the gesture templates in a one-to-one correspondence.

In the practical application, the preset gestures can be stored in association with the gesture templates in a tabular form, and the preset gestures and the gesture templates can also be stored in a database form, which is not specifically limited in the present invention.

For example, the preset gesture is stored in association with the gesture template in a tabular form and the gesture template is the area information of the contact surface, then an association relationship of a one-to-one correspondence between the preset gesture and the gesture template can be stored as a table shown in Table 1.

**Table 1**

| Preset Gestures | Gesture Templates (area/mm²) |
|---|---|
| Fisting | a |
| Stretching five fingers | b |
| Stretching a thumb only | c |
| Stretching a forefinger only | d |
| Stretching a middle finger only | e |
| Stretching a ring finger only | f |
| Stretching a little finger only | g |

Preferably, when the user conducts the preset gesture in accordance with the preset rule, the control apparatus 11 can output a prompt information to prompt the user to conduct the preset gesture. The prompt information may be voice information, or caption, or color information of an indicator light. To be sure, the prompt information may also be information regarding the number of flicking of the indicator lamp. In this way, when a correspondence between the preset gesture and the gesture template is set by the control apparatus 11, the preset gestures and the gesture templates can be set as one-to-one correspondence more accurately, thereby reducing the probability of conducting the preset gestures again by the user due to failure in correspondence, reducing the operation complexity of the user and enhancing the user experience.

In the practical application, other modes can also be used to preset the gesture templates, which is not specifically limited in the present invention.

In another embodiment, to increase the diversity of the gestures, the displacement information of the user limbs can also be combined to represent the gesture to be recognized besides that the surface information of the contact surface is used to represent the gesture to be recognized. Thus, prior to S402, the method further includes: obtaining the displacement information of the user limbs. That is to say, the control apparatus 11 can also obtain a displacement direction and a displacement amplitude of the wrist 52 through a detection of a position sensor, a gyroscope or an acceleration sensor and the like.

Then, in this case, S402 may be as follows: the gesture to be recognized is recognized based on the surface information and the displacement information to obtain the recognition result.

Specifically, the control apparatus 11 can obtain the above displacement information before obtaining the surface information through S401, after obtaining the surface information through S401 or while obtaining the surface information through S401. Then, the surface information and the displacement information can be matched with the preset gesture templates. In this case, the gesture templates include two kinds of information: the surface information and the displacement information. Finally, a preset gesture corresponding to a gesture template that is successfully matched is confirmed as the gesture to be recognized.

In S403, the controlled apparatus is controlled based on the recognition result.

Specifically, after the gesture to be recognized being recognized through S401∼S402, the control apparatus 11 queries a control instruction corresponding to the recognition result among preset control instructions. For example, after a "fisting" gesture being recognized as the gesture to be recognized, the control apparatus 11 finds a control instruction, such as a "screen locking" instruction, corresponding to the "fisting" gesture among the preset control instructions. Then, the control apparatus 11 transmits the queried control instruction to the controlled apparatus 12, so that the controlled apparatus 12 executes the control instruction to complete a corresponding function. For example, the control apparatus 11 transmits the "screen locking" instruction to the controlled apparatus 12, i.e., a smart phone, through a wireless transmission mode. As a result, after the instruction being received by the smart phone, the instruction is executed by a processing module 21, so as to control a response module 22, i.e., a display component, to lock the screen. In another embodiment, if the control apparatus 11 and the controlled apparatus 12 are arranged in the same electronic device, the control apparatus 11 can transmit the control instruction to the controlled apparatus 12 through a wired transmission mode.

In a specific implementation process, the control instructions can be stored in association with the gestures as one-to-one correspondence in a tabular form. Then, after recognizing the gesture to be recognized, the control apparatus 11 can query the control instruction corresponding to the gesture in a table look-up mode. The control instruction is not limited to the above instruction, and may also be a "start" instruction, a "shutdown" instruction, an "unlocking" instruction, a "playing a song" instruction and the like which can be set by those skilled in the art according to actual needs, which is not specifically limited in the present invention.

In conclusion, the surface information of the contact surface between the user limbs and the control apparatus is obtained through the control apparatus fixed to the user limbs, and is used for representing the gesture to be recognized. The gesture to be recognized is recognized based on at least the above surface information to obtain a recognition result, and the controlled apparatus is controlled according to the recognition result. In this way, as long as a gesture can be conducted by the user limbs, the control apparatus can control the controlled apparatus hereby without being limited by time and place. In this way, the needs of most of application scenarios can be satisfied, it is convenient for the user to operate and user experience is enhanced.

On the basis of the same inventive concept, the present embodiment provides an electronic device. The electronic device may specifically be wearable devices such as a smart watch or a smart bracelet, and can be worn on the user limbs by the user. The electronic device is connected to a controlled terminal, and can control the controlled terminal. The controlled terminal may be a smart phone, a tablet personal computer, an ultrabook or a smart television.

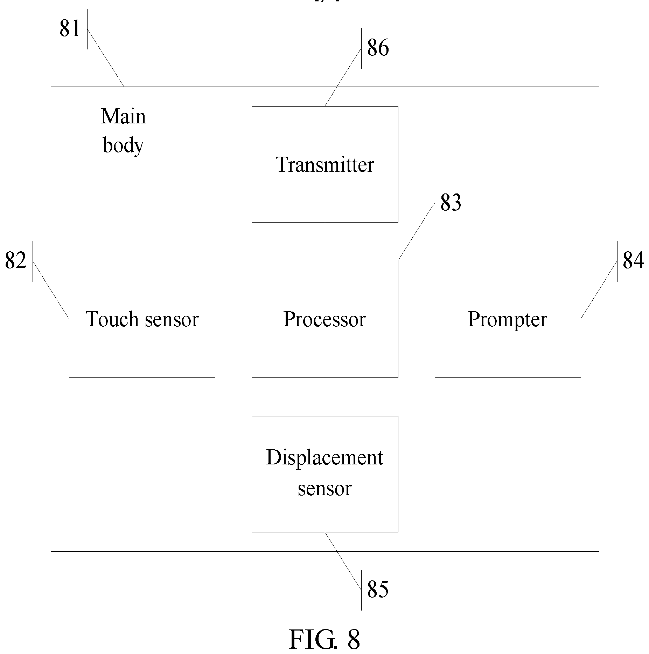

Referring to Fig. 8, the above electronic device includes: a main body 81; a touch sensor 82 loaded on the main body 81; and a processor 83 connected to the touch sensor 82.

The processor 83 is configured to obtain surface information of a contact surface between user limbs and the main body 81 by detecting the contact surface through the touch sensor 82, recognize a gesture to be recognized based on at least the surface information to obtain a recognition result, and control a controlled terminal based on the recognition result. Here, the surface information is used for representing the gesture to be recognized and the main body 81 is fixed to the user limbs.

In the present embodiment, by taking the smart bracelet as an example, when the electronic device is worn on the wrist by the user, the main body 81 clings to the wrist of the user, and the main body 81 is a ring structure made of soft materials. At the inner side of the main body 81, the touch sensor 82 is provided at a position opposite to the inner side of the wrist of the user. The touch sensor 82 is connected to the processor 83. The processor 83 is provided on the main body 81, can be provided on a surface of the main body 81 or provided in the main body 81 and is wrapped by soft materials, which is not specifically limited in the present invention.

In the practical application, the above soft materials may be elastic and ductile materials such as silica gel, rubber, ductile metal and cloth. To be sure, it may be other materials as long as the electronic device can cling to the wrist of the user when the electronic device is worn on the wrist. The touch sensor 82 may be a pressure sensor or an ITO film as long as the sensor can detect the contact surface between the wrist and the touch sensor 82.

Preferably, the processor 83 is specifically configured to: match the surface information with a preset gesture template; and confirm a preset gesture corresponding to a gesture template that is successfully matched as the gesture to be recognized.

Preferably, the processor 83 is further configured to: before the gesture to be recognized is obtained, obtain the gesture templates by detecting the contact surface through the touch sensor 82 when the preset gestures are conducted by the user; and store the preset gestures in association with the gesture templates in one-to-one correspondence.

Preferably, the electronic device further includes: a prompter 84 provided on the main body 81 and connected to the processor 83, and the prompter 84 is configured to output, before the gesture templates are obtained by the processor 83, a prompt information in accordance with a preset rule to prompt a user to conduct the preset gestures.

In the practical application, the prompter 84 specifically may be one of an indicator lamp, a loudspeaker and a display screen or a combination of above. To be sure, according to different prompting modes, the prompter 84 can also be different devices, which is not specifically limited in the present invention.

Preferably, the electronic device further includes a displacement sensor 85 configured to obtain the displacement information of the wrist before the processor 83 obtains the recognition result. Accordingly, the processor 83 is specifically configured to: recognize the gesture to be recognized based on the surface information and the displacement information, so as to obtain the recognition result.

In the practical application, the displacement sensor 85 specifically may be a position sensor, a gyroscope or an acceleration sensor. To be sure, the displacement sensor 85 can also be other types of sensors as long as the sensor can detect the displacement direction and the displacement amplitude of the wrist, which is not specifically limited in the present invention.

Preferably, the processor 83 is specifically configured to: query a control instruction corresponding to the recognition result among preset control instructions. Accordingly, the electronic device further includes: a transmitter 86, configured to transmit the queried control instruction to the controlled terminal so that the controlled terminal executes the control instruction to complete a corresponding function.

Those skilled in the art should understand that the embodiments of the present invention can be provided as a method, system or computer program product. Therefore, the present invention can adopt a form of a hardware embodiment, a software embodiment or an embodiment combining software and hardware. Moreover, the present invention can adopt a form of a computer program product capable of being implemented on one or more computer available storage media containing computer available program codes, and the computer available storage media including but not limited to disk memory, optical memory, etc.

The present invention is described with reference to flow charts and/or block diagrams according to the method, device (system) and computer program product according to the embodiments of the present invention. It should be understood that each flow and/or block in the flow charts and/or block diagrams and a combination of flows and/or blocks in the flow charts and/or block diagrams can be realized through computer program instructions. The computer program instructions can be provided for a processor of a general-purpose computer, a special-purpose computer, an embedded processor, or other programmable data processing devices to generate a machine, so that a device for realizing designated functions in one or more flows of the flow diagrams and/or one or more blocks of the block diagrams is generated through the instructions executed by the processor of the computer or other programmable data processing devices.

The computer program instructions can also be stored in a computer readable memory which can guide the computer or other programmable data processing devices to operate in a special mode, so that the instructions stored in the computer readable memory generate a manufactured product including an instruction device, the instruction device realizing designated functions in one or more flows of the flow diagrams and/or one or more blocks of the block diagrams.

The computer program instructions can also be loaded on the computer or other programmable data processing devices, so that a series of operation steps are executed on the computer or other programmable devices to generate processing realized by the computer. Therefore, the instructions executed on the computer or other programmable devices provide steps for realizing designated functions in one or more flows of the flow diagrams and/or one or more blocks of the block diagrams.

Accordingly, the embodiments of the present invention also provide a computer storage medium, wherein a computer program is stored in the computer storage medium, the computer program being used for conducting the control method of the embodiments of the present invention.

The above only describes preferred embodiments of the present invention and is not intended to limit a protection scope of the present invention.

### Industrial Applicability

In combination with the embodiments provided in the present invention, the user can recognize the gestures conducted by himself/herself through the control apparatus fixed to the user limbs, and then control the controlled apparatus through the recognized gesture. Therefore, as long as the gestures can be conducted by the user limbs, the control apparatus can control the controlled apparatus hereby without being limited by time and place, so that the needs of most of application scenarios can be satisfied, it is convenient for the user to operate and user experience is enhanced.

## Claims

1. A control method, comprising:
obtaining surface information of a contact surface between user limbs and a control apparatus by detecting the contact surface, wherein the surface information is used for representing a gesture to be recognized, and the control apparatus is fixed to the user limbs;
recognizing the gesture to be recognized based on at least the surface information to obtain a recognition result; and
controlling a controlled apparatus based on the recognition result.

2. The method according to claim 1, wherein the step of recognizing the gesture to be recognized based on at least the surface information to obtain a recognition result comprises:
matching the surface information with preset gesture templates; and
confirming a preset gesture corresponding to a gesture template that is successfully matched as the gesture to be recognized.

3. The method according to claim 2, wherein, before obtaining the gesture to be recognized, the method further comprises:
obtaining the gesture template by detecting the contact surface when the preset gesture is conducted by the user; and
storing the preset gesture in association with the gesture template in one-to-one correspondence.

4. The method according to claim 3, wherein, before the step of obtaining the gesture template, the method further comprises:
outputting prompt information in accordance with a preset rule, so as to prompt the user to conduct the preset gesture.

5. The method according to claim 1, wherein, before the step of recognizing the gesture to be recognized, the method further comprises:
obtaining displacement information of the user limbs; and
the step of recognizing the gesture to be recognized based on at least the surface information to obtain a recognition result is as follows: recognizing the gesture to be recognized based on the surface information and the displacement information to obtain the recognition result.

6. The method according to any of claims 1-5, wherein the step of controlling a controlled apparatus based on the recognition result comprises:
querying a control instruction corresponding to the recognition result among preset control instructions; and
transmitting queried control instruction to the controlled apparatus so that the controlled apparatus executes the control instruction to complete a corresponding function.

7. A control apparatus, comprising: an obtaining unit, a recognizing unit and a control unit,
wherein
the obtaining unit is configured to obtain surface information of a contact surface between user limbs and the control apparatus by detecting the contact surface, wherein the surface information is used for representing a gesture to be recognized, and the control apparatus is fixed to the user limbs;
the recognizing unit is configured to recognize the gesture to be recognized based on at least the surface information to obtain a recognition result; and
the control unit is configured to control a controlled apparatus based on the recognition result.

8. The control apparatus according to claim 7, wherein the recognizing unit comprises:
a matching subunit, configured to match the surface information with preset gesture templates;
and
a confirming subunit, configured to confirm a preset gesture corresponding to a gesture template that is successfully matched as the gesture to be recognized.

9. The control apparatus according to claim 8, wherein the obtaining unit is further configured to:
before the gesture to be recognized is obtained, obtain the gesture template by detecting the contact surface when the preset gesture is conducted by a user, and store the preset gesture in association with the gesture template in one-to-one correspondence.

10. The control apparatus according to claim 9, wherein the control apparatus further comprises:
a prompting unit, configured to output, before the gesture template is obtained by the obtaining unit, prompt information in accordance with a preset rule, so as to prompt the user to conduct the preset gesture.

11. The control apparatus according to claim 7, wherein the obtaining unit is further configured to obtain displacement information of the user limbs before the recognition result is obtained by the recognizing unit; and
the recognizing unit is configured to recognize the gesture to be recognized based on the surface information and the displacement information to obtain the recognition result.

12. The control apparatus according to any of claims 7-11, wherein the control unit comprises:
a querying subunit, configured to query a control instruction corresponding to the recognition result among preset control instructions; and
a transmission subunit, configured to transmit queried control instruction to the controlled apparatus so that the controlled apparatus executes the control instruction to complete a corresponding function.

13. An electronic device comprising a main body, wherein the electronic device further comprises: a touch sensor loaded on the main body and a processor connected to the touch sensor,
wherein
the processor is configured to: obtain surface information of a contact surface between user limbs and the main body by detecting the contact surface through the touch sensor, wherein the surface information is used for representing a gesture to be recognized and the main body is fixed to the user limbs; recognize the gesture to be recognized based on at least the surface information to obtain a recognition result; and control a controlled terminal based on the recognition result.

14. The electronic device according to claim 13, wherein the processor is configured to: match the surface information with preset gesture templates; and confirm a preset gesture corresponding to a gesture template that is successfully matched as the gesture to be recognized.

15. The electronic device according to claim 14, wherein the processor is further configured to:
before the gesture to be recognized is obtained, obtain the gesture template by detecting the contact surface through the touch sensor when the preset gesture is conducted by the user, and
store the preset gesture in association with the gesture template in one-to-one correspondence.

16. The electronic device according to claim 15, wherein the electronic device further comprises:
a prompter provided on the main body and connected to the processor, wherein the prompter is configured to output prompt information in accordance with a preset rule before the gesture template is obtained by the processor, so as to prompt the user to conduct the preset gesture.

17. The electronic device according to claim 13, wherein the electronic device further comprises:
a displacement sensor provided on the main body and connected to the processor, wherein the displacement sensor is configured to obtain displacement information of the user limbs before the recognition result is obtained by the processor; and
the processor is configured to: recognize the gesture to be recognized based on the surface information and the displacement information to obtain the recognition result.

18. The electronic device according to any of claims 13-17, wherein the processor is configured to: query a control instruction corresponding to the recognition result among preset control instructions; and
the electronic device further comprises: a transmitter, configured to transmit queried control instruction to the controlled terminal so that the controlled terminal executes the control instruction to complete a corresponding function.

19. A computer storage medium storing computer programs that are used for executing the control method according to any of claims 1-6.
